# EUROPÄISCHE PATENTANMELDUNG

(11) **EP 3 564 087 A1**
(43) Veröffentlichungstag der Anmeldung: **06.11.2019**
(21) Anmeldenummer: 19167894.5
(22) Anmeldetag: 08.04.2019
(51) Int. Cl.: B60W 30/188, B60W 10/06, B60W 10/02, B60W 10/08, B60K 6/485, F02D 41/00, B60W 20/15, F02D 19/02, F02D 19/08

(54) **VERFAHREN ZUM ADAPTIEREN EINER VERBRENNUNGSKRAFTMASCHINE EINES ANTRIEBSSYSTEMS EINES KRAFTFAHRZEUGS AN EINEN GASFÖRMIGEN KRAFTSTOFF MIT UNBEKANNTER KRAFTSTOFFQUALITÄT, ANTRIEBSSYSTEM UND KRAFTFAHRZEUG**

(30) Priorität: 17.04.2018 DE 102018109118
(71) Anmelder: VOLKSWAGEN AKTIENGESELLSCHAFT, 38440 Wolfsburg (DE)
(72) Erfinder: Weß, Alexander, 38442 Wolfsburg (DE); Engler, Frank, 38448 Wolfsburg (DE); Koppenhagen, Kay, 38126 Braunschweig (DE)
(74) Vertreter: Patentanwälte Bals & Vogel

(57) **Zusammenfassung**

Die Erfindung betrifft ein Verfahren zum Adaptieren einer Verbrennungskraftmaschine (1) eines Antriebssystems (2) eines Kraftfahrzeugs (3) an einen gasförmigen Kraftstoff mit unbekannter Kraftstoffqualität, wobei das Antriebssystem (2) eine Kupplung (4) zum mechanischen Koppeln der Verbrennungskraftmaschine (1) mit einem Getriebe (5) des Antriebssystems (2) aufweist, aufweisend die folgenden Schritte:
- definiertes Ansteuern der Verbrennungskraftmaschine (1) mittels einer Motorsteuerungsvorrichtung (6) des Antriebssystems (2),
- Einkuppeln der Kupplung (4) derart, dass die Verbrennungskraftmaschine (1) mit dem Getriebe (5) mechanisch gekoppelt ist und die Kupplung (4) mit einem definierten Schlupf betrieben wird,
- Ermitteln eines Kupplungsdrucks der Kupplung (4) mittels einer Druckermittlungsvorrichtung (7),
- Bestimmen eines an der Kupplung (4) anliegenden IST-Drehmoments der Verbrennungskraftmaschine (1) auf Basis des ermittelten Kupplungsdrucks der Kupplung (4) mittels einer Bestimmungsvorrichtung (8),
- Vergleichen des bestimmten IST-Drehmoments mit einem definierten SOLL-Drehmoment der Verbrennungskraftmaschine (1) mittels einer Vergleichsvorrichtung (9),
- Bestimmen eines Korrekturwerts zur Anpassung des IST-Drehmoments an das SOLL-Drehmoment mittels der Motorsteuerungsvorrichtung (6), und
- Ansteuern der Verbrennungskraftmaschine auf Basis des Korrekturwerts mittels der Motorsteuerungsvorrichtung (6) derart, dass das IST-Drehmoment dem SOLL-Drehmoment angepasst wird.

Ferner betrifft die Erfindung ein Antriebssystem (2) und ein Kraftfahrzeug (3).

## Beschreibung

Die vorliegende Erfindung betrifft ein Verfahren zum Adaptieren einer Verbrennungskraftmaschine eines, insbesondere hybriden, Antriebssystems eines Kraftfahrzeugs an einen gasförmigen Kraftstoff mit unbekannter Kraftstoffqualität. Ferner betrifft die Erfindung ein Antriebssystem, insbesondere ein hybrides Antriebssystem, für ein Kraftfahrzeug sowie ein Kraftfahrzeug mit einem Antriebssystem.

Die Kraftstoffqualität eines gasförmigen Kraftstoffs ist ein Maß für eine chemische Zusammensetzung sowie für chemische Eigenschaften des gasförmigen Kraftstoffs. Unterschiedliche Kraftstoffqualitäten gasförmiger Kraftstoffe äußern sich beispielsweise in unterschiedlichen Anteilen von bspw. Methan, Kohlendioxid und Stickstoff, aus denen unterschiedliche Heizwerte, Luftbedarfe, Klopffestigkeiten oder dergleichen resultieren. Insbesondere nach einem Tankvorgang mit einem gasförmigen Kraftstoff weist der Kraftstofftank einen Kraftstoff auf, dessen Kraftstoffqualität nicht genau bekannt ist, da die Kraftstoffqualitäten gasförmiger Kraftstoffe verschiedener Tankstellen stark variieren können. Aus diesem Grund ist insbesondere nach einem Tankvorgang eine Bestimmung der Kraftstoffqualität erforderlich, um die Verbrennungskraftmaschine mittels einer Motorsteuerungsvorrichtung optimal zu betreiben.

Es sind bivalente Antriebssysteme bekannt, bei welchen eine Verbrennungskraftmaschine sowohl mit einem flüssigen Kraftstoff, wie zum Beispiel Ottokraftstoff, und einem gasförmigen Kraftstoff, wie zum Beispiel Erdgas, insbesondere komprimiertes Erdgas, welches auch als "CNG" (compressed natural gas) bezeichnet wird, betreibbar ist. Gasförmige Kraftstoffe haben den Nachteil, dass die Kraftstoffqualität des gasförmigen Kraftstoffs im Gegensatz zur Kraftstoffqualität eines flüssigen Kraftstoffs besonders starken Schwankungen unterliegt. Zum optimalen Betreiben der Verbrennungskraftmaschine mit dem gasförmigen Kraftstoff ist daher zunächst eine Ermittlung der Kraftstoffqualität des gasförmigen Kraftstoffs erforderlich. Bei bivalenten Antriebssystemen ist eine solche Ermittlung unter Verwendung des flüssigen Kraftstoffs möglich. Bei monovalenten Antriebssystemen mit gasförmigem Kraftstoff ist kein flüssiger Kraftstoff für eine solche Ermittlung der Kraftstoffqualität verfügbar, sodass alternative Verfahren bereitgestellt werden müssen.

Aus der DE 10 2006 050 357 A1 ist ein Verfahren zum Bestimmen einer Zusammensetzung eines Gasgemisches in einem Kraftstofftank bekannt. Über einen definierten Zeitraum wird hierbei Gas aus dem Kraftstofftank entnommen. Über eine ermittelte Masse des entnommenen Gases sowie eine Druckdifferenz eines Drucks im Kraftstofftank vor der Entnahme und eines Drucks im Kraftstofftank nach der Entnahme kann auf die Zusammensetzung des gasförmigen Kraftstoffs rückgeschlossen werden. Ein derartiges Verfahren ist relativ ungenau und kann zur Bestimmung falscher Kraftstoffqualitäten führen. Die US 2017/0268438 A1 betrifft ein Verfahren zum Betreiben einer bivalenten Verbrennungskraftmaschine, bei welchem eine Ermittlung der Kraftstoffqualität des gasförmigen Kraftstoffs durch Messung von Abgasen unter Verwendung einer Lambda-Sonde erfolgt. Die EP 1 143 134 A1 offenbart ein Verfahren zum Bestimmen einer Motorleistung einer Verbrennungskraftmaschine mittels eines Generators sowie einer Vorrichtung zum Bestimmen eines Drehmoments des Generators. Die DE 10 2008 014 613 A1 offenbart ein Steuersystem und ein Steuerverfahren zum adaptiven Schalten von Übersetzungsverhältnissen nach einem Tankvorgang. Um Leistungsschwankungen der Verbrennungskraftmaschine aufgrund einer veränderten Kraftstoffqualität zu kompensieren, wird über einen bestimmten Zeitraum eine Geschwindigkeit des Anpassens von Getriebeschaltungen modifiziert. Auf diese Weise kann schneller auf eine Veränderung von Schaltkennlinien, welche auf Unterschieden des von der Verbrennungskraftmaschine bereitgestellten Motordrehmoments beruhen, reagiert werden. Aus der DE 10 2009 017 207 A1 ist ein Motorsteuerungssystem bekannt, mittels welchem eine Kraftstoffqualität aus einem ermittelten Drehmoment und einer Drehzahlveränderung einer Verbrennungskraftmaschine berechenbar ist.

Bekannte Vorrichtungen und Verfahren zum Bestimmen einer Kraftstoffqualität eines gasförmigen Kraftstoffs für eine Verbrennungskraftmaschine eines Antriebssystems eines Kraftfahrzeugs haben den Nachteil, dass eine Kraftstoffqualität nur sehr aufwendig sowie unter Verwendung kostenintensiver Hilfsmittel bestimmbar ist. Zudem haben einige gattungsgemäße Verfahren und Vorrichtungen den Nachteil, dass die Kraftstoffqualität gasförmiger Kraftstoffe nur verhältnismäßig ungenau bestimmbar ist.

Es ist daher Aufgabe der vorliegenden Erfindung, die voranstehend beschriebenen Nachteile bei einem Verfahren zum Adaptieren einer Verbrennungskraftmaschine eines Antriebssystems eines Kraftfahrzeugs an einen gasförmigen Kraftstoff mit unbekannter Kraftstoffqualität, einem Antriebssystem für ein Kraftfahrzeug sowie einem Kraftfahrzeug mit einem Antriebssystem zu beheben oder zumindest teilweise zu beheben. Insbesondere ist es Aufgabe der vorliegenden Erfindung, ein Verfahren, ein Antriebssystem sowie ein Kraftfahrzeug zu schaffen, die auf eine einfache und kostengünstige Art und Weise eine zuverlässige sowie genaue Adaption der Verbrennungskraftmaschine an einen gasförmigen Kraftstoff mit unbekannter Kraftstoffqualität sicherstellen.

Voranstehende Aufgabe wird durch die Patentansprüche gelöst. Demnach wird die Aufgabe durch ein Verfahren zum Adaptieren einer Verbrennungskraftmaschine eines Antriebssystems eines Kraftfahrzeugs an einen gasförmigen Kraftstoff mit unbekannter Kraftstoffqualität mit den Merkmalen des unabhängigen Anspruchs 1, durch ein Antriebssystem für ein Kraftfahrzeug mit den Merkmalen des nebengeordneten Anspruchs 9 sowie durch ein Kraftfahrzeug mit einem Antriebssystem mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Antriebssystem für ein Kraftfahrzeug sowie dem Kraftfahrzeug mit dem Antriebssystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Adaptieren einer Verbrennungskraftmaschine eines Antriebssystems eines Kraftfahrzeugs an einen gasförmigen Kraftstoff mit unbekannter Kraftstoffqualität gelöst, wobei das Antriebssystem eine Kupplung zum mechanischen Koppeln der Verbrennungskraftmaschine mit einem Getriebe des Antriebssystems aufweist. Das erfindungsgemäße Verfahren weist die folgenden Schritte auf:
- definiertes Ansteuern der Verbrennungskraftmaschine mittels einer Motorsteuerungsvorrichtung des Antriebssystems,
- Einkuppeln der Kupplung derart, dass die Verbrennungskraftmaschine mit dem Getriebe mechanisch gekoppelt ist und die Kupplung mit einem definierten Schlupf betrieben wird,
- Ermitteln eines Kupplungsdrucks der Kupplung mittels einer Druckermittlungsvorrichtung,
- Bestimmen eines an der Kupplung anliegenden IST-Drehmoments der Verbrennungskraftmaschine auf Basis des ermittelten Kupplungsdrucks der Kupplung mittels einer Bestimmungsvorrichtung,
- Vergleichen des bestimmten IST-Drehmoments mit einem definierten SOLL-Drehmoment der Verbrennungskraftmaschine mittels einer Vergleichsvorrichtung,
- Bestimmen eines Korrekturwerts zur Anpassung des IST-Drehmoments an das SOLL-Drehmoment mittels der Motorsteuerungsvorrichtung, und
- Ansteuern der Verbrennungskraftmaschine auf Basis des Korrekturwerts mittels der Motorsteuerungsvorrichtung derart, dass das IST-Drehmoment dem SOLL-Drehmoment angepasst wird.

Das zur Durchführung des Verfahrens verwendete Antriebssystem weist die Verbrennungskraftmaschine auf, welche zum Verbrennen eines gasförmigen Kraftstoffs, wie zum Beispiel CNG, ausgebildet ist. Zudem weist das Antriebssystem ein Getriebe sowie eine Kupplung auf. Mittels der Kupplung ist die Verbrennungskraftmaschine mechanisch mit dem Getriebe koppelbar. Zu Beginn der Durchführung des erfindungsgemäßen Verfahrens ist die Verbrennungskraftmaschine vorzugsweise von dem Getriebe mechanisch entkoppelt. Die Kupplung ist demnach vorzugsweise in einem offenen Zustand.

Erfindungsgemäß wird die Verbrennungskraftmaschine mittels der Motorsteuerungsvorrichtung des Antriebssystems definiert angesteuert. Hierbei wird mittels einer Kraftstoffeinlassvorrichtung des Antriebssystems, insbesondere über Einlassventile der Kraftstoffeinlassvorrichtung, gasförmiger Kraftstoff in die Verbrennungskraftmaschine eingebracht. Der gasförmige Kraftstoff wird dabei in mindestens einen Zylinder der Verbrennungskraftmaschine, vorzugsweise in sämtliche Zylinder der Verbrennungskraftmaschine, eingebracht bzw. eingeblasen. Das Einbringen des gasförmigen Kraftstoffs in die verschiedenen Zylinder erfolgt vorzugsweise zeitversetzt in Abhängigkeit von Kolbenstellungen von den einzelnen Zylindern zugeordneten Kolben. Eine initiale Einbringmenge des gasförmigen Kraftstoffs wird vorzugsweise derart festgelegt, dass diese einer Einbringmenge eines gasförmigen Kraftstoffs mit der Referenzkraftstoffqualität zum Antreiben der Verbrennungskraftmaschine mit der Schleppdrehzahl entspricht. Die Referenzkraftstoffqualität kann beispielsweise als eine durchschnittliche Kraftstoffqualität, insbesondere in Abhängigkeit eines Standorts des Kraftfahrzeugs, vordefiniert sein. Weiterhin kann die Referenzkraftstoffqualität aus dem vorangegangenen Betriebsverhalten (z. B. vor einem Tankvorgang) definiert werden. Nachfolgend wird der gasförmige Kraftstoff mittels der Zündvorrichtung des Antriebssystems gezündet. Das Zünden erfolgt vorzugsweise in Abhängigkeit von Kolbenstellungen der Kolben der verschiedenen Zylinder der Verbrennungskraftmaschine. Durch das Zünden wird der gasförmige Kraftstoff verbrannt und expandiert. In Verbindung mit einer externen Startvorrichtung wie bspw. Anlasser wird auf diese Weise die Verbrennungskraftmaschine gestartet. Das Einbringen des gasförmigen Kraftstoffs sowie das Zünden erfolgt vorzugsweise fortlaufend getaktet, sodass die Verbrennungskraftmaschine hierdurch vorzugsweise selbstständig läuft und das IST-Betriebsdrehmoment erzeugt.

Durch Einkuppeln der Kupplung wird die Verbrennungskraftmaschine mit dem Getriebe mechanisch gekoppelt. Die Kupplung wird dabei derart geschlossen, dass diese einen Schlupf aufweist. Eine Kupplungseingangsdrehzahl der Kupplung, welche i. A. der Motordrehzahl der Verbrennungskraftmaschine entspricht, ist somit von einer Kupplungsausgangsdrehzahl der Kupplung, welche einer Getriebeeingangsdrehzahl des Getriebes entspricht, verschieden. Die Kupplung wird vorzugsweise derart geregelt, dass der Schlupf der Kupplung konstant ist.

Mittels der Druckermittlungsvorrichtung wird der Kupplungsdruck der Kupplung ermittelt. Das Ermitteln des Kupplungsdrucks kann beispielsweise durch Messen eines hydraulischen Drucks einer Hydraulikleitung der Kupplung, Ansteuern einer Hydraulikpumpe mittels einer Kupplungssteuerungsvorrichtung oder Messung des elektrischen Stroms bei elektrisch aktuierten Kupplungen oder dergleichen erfolgen. Der erforderliche Kupplungsdruck, welcher notwendig ist, damit der SOLL-Schlupf erreicht wird, ist abhängig von einem Lastzustand am Getriebeausgang, einem IST-Drehmoment der Verbrennungskraftmaschine sowie dem Schlupf der Kupplung.

Anschließend wird mittels der Bestimmungsvorrichtung das an der Kupplung anliegende IST-Drehmoment der Verbrennungskraftmaschine bestimmt. Hierfür wird der ermittelte Kupplungsdruck oder ein vergleichbarer Wert zugrunde gelegt. Da sonstige Parameter des Getriebes und der Kupplung bekannt sind, ist aus dem Kupplungsdruck das IST-Drehmoment herleitbar. Auf diese Weise kann auch die Kraftstoffqualität des aktuell verwendeten Kraftstoffs bestimmt werden, welche mit dem IST-Drehmoment sowie dem definierten Ansteuern der Verbrennungskraftmaschine in einer direkten Abhängigkeit steht und somit leicht bestimmbar ist.

Die Vergleichsvorrichtung vergleicht das bestimmte IST-Drehmoment mit dem definierten SOLL-Drehmoment der Verbrennungskraftmaschine, welches die Verbrennungskraftmaschine bei dem definierten Ansteuern und Beaufschlagung mit einem Referenzkraftstoff, also einem gasförmigen Kraftstoff mit der Referenzkraftstoffqualität aufweisen müsste. Das qualitative Ergebnis des Vergleichs ist, dass das IST-Drehmoment größer, kleiner oder gleich dem SOLL-Drehmoment ist und somit beispielsweise die eingebrachte bzw. eingeblasene Kraftstoffmenge verringert, erhöht oder konstant gehalten werden muss. Alternativ ist auch eine Anpassung der eingebrachten Luftmenge, insbesondere durch eine Drosselklappe, möglich.

Mittels der Motorsteuerungsvorrichtung wird im Anschluss der Korrekturwert zur Anpassung des IST-Drehmoments an das SOLL-Drehmoment bestimmt. Der Korrekturwert beschreibt beispielsweise eine Höhe der Anpassung der einzubringenden Kraftstoffmenge und/oder Luftmenge. Anhand des Korrekturwerts ist die Kraftstoffqualität, insbesondere mittels der Motorsteuerungsvorrichtung, ermittelbar.

Anschließend erfolgt mittels der Motorsteuerungsvorrichtung des Antriebssystems eine Adaption der Verbrennungskraftmaschine an den aktuell verwendeten gasförmigen Kraftstoff auf Basis des Korrekturwerts. Hierbei wird das IST-Betriebsdrehmoment der Verbrennungskraftmaschine dem SOLL-Betriebsdrehmoment angepasst, insbesondere durch ein Verändern der Einbringmenge des gasförmigen Kraftstoffs in die Verbrennungskraftmaschine. Die Anpassung erfolgt vorzugsweise derart, dass das IST-Betriebsdrehmoment der Verbrennungskraftmaschine dem SOLL-Betriebsdrehmoment entspricht. Die Veränderung der Einbringmenge wird mittels der Kraftstoffeinlassvorrichtung realisiert. Dabei wird die Kraftstoffmenge des in die Verbrennungskraftmaschine eingebrachten gasförmigen Kraftstoffs mittels der Kraftstoffeinlassvorrichtung in Abhängigkeit des ermittelten IST-Betriebsdrehmoments derart variiert, dass die Kraftstoffmenge erhöht wird, wenn das ermittelte IST-Betriebsdrehmoment kleiner als das SOLL-Betriebsdrehmoment ist, bzw. dass die Kraftstoffmenge verringert wird, wenn das ermittelte IST-Betriebsdrehmoment größer als das SOLL-Betriebsdrehmoment ist.

Ein erfindungsgemäßes Verfahren zum Adaptieren einer Verbrennungskraftmaschine eines Antriebssystems eines Kraftfahrzeugs an einen gasförmigen Kraftstoff mit unbekannter Kraftstoffqualität hat gegenüber herkömmlichen Verfahren den Vorteil, dass mit einfachen Mitteln sowie auf eine kostengünstige Art und Weise die Verbrennungskraftmaschine auf die unbekannte Kraftstoffqualität des gasförmigen Kraftstoffs zuverlässig einstellbar ist, ohne dass hierfür eine explizite Bestimmung der Kraftstoffqualität erforderlich ist oder eine weitere Energiequelle (z.B. flüssiger Kraftstoff) erforderlich ist. Auf diese Weise sind ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Gemäß einer bevorzugten Weiterentwicklung der Erfindung kann bei einem Verfahren vorgesehen sein, dass die Kupplung mit Mikroschlupf betrieben wird. Unter Mikroschlupf wird im Rahmen der Erfindung ein Schlupf von etwa 1 % oder weniger Abweichung zwischen Kupplungseingangsdrehzahl und Kupplungsausgangsdrehzahl verstanden. Mikroschlupf hat den Vorteil, dass ein Großteil des Drehmoments übertragbar ist, wobei eine Schwingungsisolation des Antriebsstrangs verbessert ist. Auf diese Weise kann ein Rasseln, Brummen und/oder Ruckeln des Antriebsstrangs mit einfachen Mitteln sowie kostengünstig reduziert werden.

Es ist erfindungsgemäß bevorzugt, dass ein hybrides Antriebssystem verwendet wird, welches eine mit der Verbrennungskraftmaschine mechanisch koppelbare Elektromaschine aufweist, wobei das Bestimmen des an der Kupplung anliegenden IST-Drehmoments der Verbrennungskraftmaschine auf Basis des ermittelten Kupplungsdrucks der Kupplung und eines IST-Elektrodrehmoments der Elektromaschine erfolgt. Das Antreiben erfolgt vorzugsweise mit einer Drehrichtung, welche einer Betriebsdrehrichtung der Verbrennungskraftmaschine bei regulärem Kraftstoffbetrieb entspricht. Es kann erfindungsgemäß vorgesehen sein, dass die Schleppdrehzahl höher als die Startdrehzahl der Verbrennungskraftmaschine gewählt ist. Das IST-Drehmoment der Verbrennungskraftmaschine ergibt sich aus der Differenz eines an der Kupplung anliegenden Kupplungsdrehmoments und dem IST-Elektrodrehmoment der Elektromaschine. Das IST-Elektrodrehmoment kann erfindungsgemäß null oder mehr betragen. Die Verwendung eines derartigen hybriden Antriebssystems hat den Vorteil, dass ein ruckelfreier Betrieb des Antriebssystems verbessert ist.

Weiter bevorzugt wird die Verbrennungskraftmaschine zu Beginn des Verfahrens mittels der Elektromaschine des hybriden Antriebssystems auf eine Schleppdrehzahl gebracht. Die Schleppdrehzahl ist vorzugsweise mindestens so hoch wie eine Startdrehzahl der Verbrennungskraftmaschine, bei welcher ein sicheres Starten der Verbrennungskraftmaschine gerade gewährleistet ist. Auf diese Weise ist ein ruckelfreier Betrieb des Antriebsstrangs weiter verbesserbar.

Vorzugsweise wird die Verbrennungskraftmaschine mittels der Elektromaschine auf der Schleppdrehzahl gehalten, um ein Stoppen der Verbrennungskraftmaschine aufgrund einer unzureichenden Verbrennung zu vermeiden. Eine unzureichende Verbrennung findet beispielsweise dann statt, wenn die Kraftstoffqualität nicht zum definierten Ansteuern der Verbrennungskraftmaschine passt. Erst im Rahmen der Adaption der Verbrennungskraftmaschine bei der Durchführung des erfindungsgemäßen Verfahrens ist ein Zustand erreichbar, bei welchem das definierte Ansteuern der Verbrennungskraftmaschine einen eigenständigen Betrieb der Verbrennungskraftmaschine ermöglicht. In diesem Zustand kann es vorgesehen sein, dass bei einer vordefinierten großen Abweichung des IST-Drehmoments vom SOLL-Drehmoment die Elektromaschine die Verbrennungskraftmaschine solange unterstützt, bis die Abweichung einen Schwellwert unterschreitet und die Verbrennungskraftmaschine somit ein IST-Drehmoment bereitstellt, welches dem SOLL-Drehmoment ausreichend nahekommt, sodass auf eine Unterstützung durch die Elektromaschine verzichtet werden kann. Ein ruckelfreier Betrieb des Antriebsstrangs ist auf diese Weise weiter verbesserbar.

In einer alternativen Ausgestaltung des Verfahrens wird eine Elektromaschine verwendet, welche zum Antreiben des Kraftfahrzeugs, als Riemenstartergenerator oder Anlasser des Kraftfahrzeugs ausgebildet ist. Eine Elektromaschine, welche zum Antreiben des Kraftfahrzeugs, insbesondere zum sogenannten Boosten ausgebildet ist, hat den Vorteil, dass das Antreiben der Verbrennungskraftmaschine auf die Schleppdrehzahl verbessert ist, wobei die Schleppdrehzahl wesentlich flexibler festlegbar ist und deutlich höher als eine Startdrehzahl der Verbrennungskraftmaschine gewählt werden kann. Somit kann das erfindungsgemäße Verfahren mit einer wesentlich größeren Zahl an Varianten durchgeführt werden. Mittels einer als Riemenstartergenerator oder Anlasser des Kraftfahrzeugs ausgebildeten Elektromaschine ist die Verbrennungskraftmaschine zum Starten auf eine Startdrehzahl bringbar. Es kann erfindungsgemäß vorgesehen sein, dass der Riemenstartergenerator zusätzlich zum Unterstützen der Verbrennungskraftmaschine durch Bereitstellen eines Unterstützungsdrehmoments ausgebildet ist. Eine derartige Elektromaschine hat den Vorteil, dass die Kosten des hybriden Antriebsstrangs reduziert sind, wobei ein zuverlässiges Adaptieren der Verbrennungskraftmaschine an einen gasförmigen Kraftstoff mit unbekannter Kraftstoffqualität weiterhin gewährleistet ist.

Weiter bevorzugt wird der Kupplungsdruck der Kupplung mittels einer als Drucksensor oder Kupplungssteuerungsvorrichtung ausgebildeten Druckermittlungsvorrichtung ermittelt. Der Drucksensor kann beispielswese mit einer hydraulischen Druckleitung der Kupplung fluidkommunizierend gekoppelt sein. Die Kupplungssteuerungsvorrichtung gibt beispielsweise zum Einstellen eines vorgegebenen Schlupfes einen SOLL-Kupplungsdruck vor, welcher bei bestimmungsgemäß funktionierender Kupplung dem zu ermittelnden Kupplungsdruck entspricht. Bei elektrisch aktuierten Kupplungen kann der Anpressdruck der Kupplungsscheiben und damit das übertragene Moment bspw. durch Messung des Aktuatorstroms oder bei bekannter Kupplungskennlinie durch den Kupplungsweg bestimmt werden.

Es ist erfindungsgemäß bevorzugt, dass der definierte Schlupf mittels eines ersten Drehzahlsensors und eines zweiten Drehzahlsensors ermittelt wird, wobei der erste Drehzahlsensor zum Bestimmen einer Kupplungseingangsdrehzahl der Kupplung und/oder einer Motordrehzahl der Verbrennungskraftmaschine und der zweite Drehzahlsensor zum Bestimmen einer Kupplungsausgangsdrehzahl der Kupplung und/oder einer Getriebeeingangsdrehzahl des Getriebes ausgebildet und angeordnet ist. Die Kupplungseingangsdrehzahl entspricht vorzugsweise der Motordrehzahl oder steht zu dieser vorzugsweise in einem festgelegten, bekannten oder bestimmbaren Verhältnis. Ebenso entspricht die Kupplungsausgangsdrehzahl vorzugsweise der Getriebeeingangsdrehzahl, Getriebeausgangsdrehzahl, Raddrehzahl oder steht zu dieser vorzugsweise in einem festgelegten, bekannten oder bestimmbaren Verhältnis. Die Drehzahlsensoren können zur Drehzahlerfassung auf optischer und/oder elektronischer und/oder magnetischer Basis ausgebildet sein. Die Kupplung wird vorzugsweise derart angesteuert, dass der Schlupf bei der Durchführung des Verfahrens konstant bleibt. Ebenso ist eine Durchführung des Verfahrens bei variablem Schlupf möglich, wobei eine Abweichung des Schlupfes bei der Bestimmung des IST-Drehmoments berücksichtigt wird. Mittels derartiger Drehzahlsensoren ist mit einfachen Mitteln sowie kostengünstig eine zuverlässige Bestimmung sowie Regelung des Schlupfes gewährleistbar.

Gemäß einem zweiten Aspekt der Erfindung wird die Aufgabe durch ein, insbesondere hybrides, Antriebssystem für ein Kraftfahrzeug gelöst. Das Antriebssystem weist eine mit einem gasförmigen Kraftstoff betreibbare Verbrennungskraftmaschine, eine Motorsteuerungsvorrichtung zum Steuern der Verbrennungskraftmaschine, eine Kraftstoffeinlassvorrichtung zum Einbringen des gasförmigen Kraftstoffs in die Verbrennungskraftmaschine, eine Zündvorrichtung zum Zünden des gasförmigen Kraftstoffs, eine Kupplung mit einer Kupplungssteuerungsvorrichtung zum mechanischen Koppeln der Verbrennungskraftmaschine mit einem Getriebe des Antriebssystems, eine Druckermittlungsvorrichtung zum Ermitteln eines Kupplungsdrucks der Kupplung, eine Bestimmungsvorrichtung zum Bestimmen eines an der Kupplung anliegenden IST-Drehmoments auf Basis des ermittelten Kupplungsdrucks, und eine Vergleichsvorrichtung zum Vergleichen des bestimmten IST-Drehmoments mit einem definierten SOLL-Drehmoment der Verbrennungskraftmaschine auf. Erfindungsgemäß ist das Antriebssystem zur Durchführung des erfindungsgemäßen Verfahrens ausgebildet.

Die Verbrennungskraftmaschine ist zum Verbrennen eines gasförmigen Kraftstoffs, wie zum Beispiel CNG, ausgebildet. Die Verbrennungskraftmaschine ist mittels der Motorsteuerungsvorrichtung des Antriebssystems definiert ansteuerbar. Hierbei ist mittels einer Kraftstoffeinlassvorrichtung des Antriebssystems, insbesondere über Einlassventile der Kraftstoffeinlassvorrichtung, gasförmiger Kraftstoff in die Verbrennungskraftmaschine einbringbar. Der gasförmige Kraftstoff ist dabei in mindestens einen Zylinder der Verbrennungskraftmaschine, vorzugsweise in sämtliche Zylinder der Verbrennungskraftmaschine, insbesondere in Abhängigkeit von Kolbenstellungen der Kolben der verschiedenen Zylinder der Verbrennungskraftmaschine, einbringbar bzw. einblasbar. Der gasförmige Kraftstoff ist mittels der Zündvorrichtung des Antriebssystems, insbesondere in Abhängigkeit von Kolbenstellungen der Kolben der verschiedenen Zylinder der Verbrennungskraftmaschine, zündbar. Durch das Zünden ist der gasförmige Kraftstoff verbrennbar und somit expandierbar. Die Kraftstoffeinlassvorrichtung und die Zündvorrichtung sind vorzugsweise derart ausgebildet, dass das Einbringen sowie das Zünden des gasförmigen Kraftstoffs fortlaufend getaktet durchführbar ist. Auf diese Weise ist das IST-Drehmoment der Verbrennungskraftmaschine erzeugbar. Zudem ist die Motorsteuerungsvorrichtung zum Bestimmen des Korrekturwerts sowie zum Anpassen des IST-Betriebsdrehmoments der Verbrennungskraftmaschine an das SOLL-Betriebsdrehmoment auf Basis des Korrekturwerts, insbesondere durch Anpassen einer Einbringmenge des gasförmigen Kraftstoffs in die Verbrennungskraftmaschine, ausgebildet. Bei einem hybriden Antriebsstrang ist die Motorsteuerungsvorrichtung vorzugsweise auch zum Steuern der Elektromaschine ausgebildet.

Die Kupplung ist zum mechanischen Koppeln der Verbrennungskraftmaschine mit dem Getriebe ausgebildet, wobei die Kupplung derart betreibbar ausgebildet ist, dass diese einen Schlupf, insbesondere einen Mikroschlupf, aufweist.

Die Druckermittlungsvorrichtung ist zum Ermitteln des Kupplungsdrucks der Kupplung ausgebildet. Hierfür weist die Druckermittlungsvorrichtung beispielsweise einen Drucksensor auf oder ist als Kupplungssteuerungsvorrichtung ausgebildet.

Die Bestimmungsvorrichtung ist zum Bestimmen des an der Kupplung anliegenden IST-Drehmoments auf Basis des ermittelten Kupplungsdrucks oder elektrischer oder mechanischer Messgrößen ausgebildet. Aufgrund bekannter Abhängigkeiten von Schlupf, IST-Drehmoment und Kupplungsdruck, ist das IST-Drehmoment mittels der Bestimmungsvorrichtung bestimmbar. Die Bestimmungsvorrichtung ist vorzugsweise als Teil der Motorsteuerungsvorrichtung ausgebildet.

Die Vergleichsvorrichtung ist zum Vergleichen des bestimmten IST-Drehmoments mit einem definierten SOLL-Drehmoment der Verbrennungskraftmaschine ausgebildet. Vorzugsweise ist die Vergleichsvorrichtung als Teil der Motorsteuerungsvorrichtung ausgebildet.

Bei dem beschriebenen Antriebssystem für ein Kraftfahrzeug ergeben sich sämtliche Vorteile, die bereits zu einem Verfahren zum Adaptieren einer Verbrennungskraftmaschine eines Antriebssystems eines Kraftfahrzeugs an einen gasförmigen Kraftstoff mit unbekannter Kraftstoffqualität gemäß dem ersten Aspekt der Erfindung beschrieben worden sind. Demnach hat das erfindungsgemäße Antriebssystem gegenüber herkömmlichen Antriebssystemen den Vorteil, dass mit einfachen Mitteln sowie auf eine kostengünstige Art und Weise die Verbrennungskraftmaschine auf die unbekannte Kraftstoffqualität des gasförmigen Kraftstoffs zuverlässig einstellbar ist, ohne dass hierfür eine explizite Bestimmung der Kraftstoffqualität erforderlich ist. Auf diese Weise ist ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Gemäß einem dritten Aspekt der Erfindung wird die Aufgabe durch ein Kraftfahrzeug mit einem Antriebssystem gelöst. Erfindungsgemäß ist das Antriebssystem gemäß einem erfindungsgemäßen Antriebssystem ausgebildet.

Bei dem beschriebenen Kraftfahrzeug ergeben sich sämtliche Vorteile, die bereits zu einem Verfahren zum Adaptieren einer Verbrennungskraftmaschine eines Antriebssystems eines Kraftfahrzeugs an einen gasförmigen Kraftstoff mit unbekannter Kraftstoffqualität gemäß dem ersten Aspekt der Erfindung sowie zu einem Antriebssystem für ein Kraftfahrzeug gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise die Verbrennungskraftmaschine auf die unbekannte Kraftstoffqualität des gasförmigen Kraftstoffs zuverlässig einstellbar ist, ohne dass hierfür eine explizite Bestimmung der Kraftstoffqualität erforderlich ist. Auf diese Weise ist ein Einstellen der Verbrennungskraftmaschine auf einen neuen gasförmigen Kraftstoff sowie eine Betriebssicherheit und ein Wirkungsgrad der Verbrennungskraftmaschine erheblich verbesserbar.

Ein erfindungsgemäßes Verfahren sowie ein erfindungsgemäßes Antriebssystem und ein erfindungsgemäßes Kraftfahrzeug werden nachfolgend anhand von Zeichnungen näher erläutert. Es zeigen jeweils schematisch:
- Figur 1: in einer Seitenansicht eine bevorzugte Ausführungsform eines erfindungsgemäßen Kraftfahrzeugs mit einem erfindungsgemäßen Antriebssystem, und
- Figur 2: in einem Ablaufdiagramm eine bevorzugte Ausführungsform des erfindungsgemäßen Verfahrens.

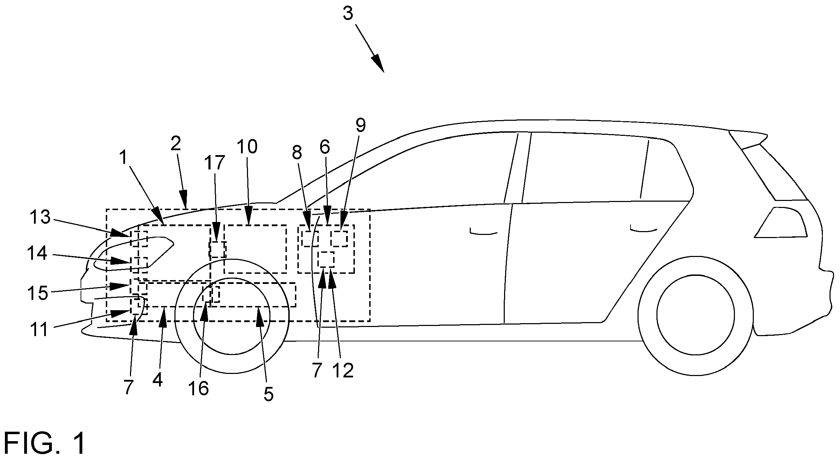

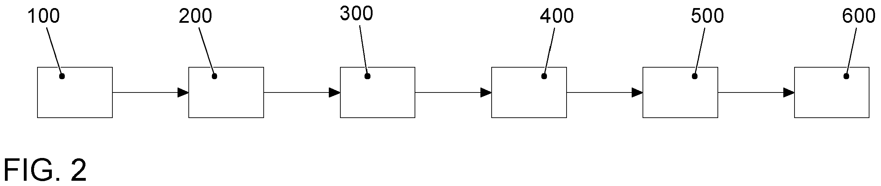

Elemente mit gleicher Funktion und Wirkungsweise sind in den Fig. 1 und 2 jeweils mit denselben Bezugszeichen versehen.

Fig. 1 zeigt eine bevorzugte Ausführungsform eines erfindungsgemäßen Kraftfahrzeugs 3 mit einem erfindungsgemäßen Antriebssystem 2 schematisch in einer Seitenansicht. Das Kraftfahrzeug 3 weist ein hybrides Antriebssystem 2 mit einer Verbrennungskraftmaschine 1 und einer über eine mechanische Anbindung 17 mit der Verbrennungskraftmaschine 1 mechanisch gekoppelte bzw. koppelbare Elektromaschine 10 auf. Ferner weist das Antriebssystem 2 eine Motorsteuerungsvorrichtung 6 zum Steuern der Verbrennungskraftmaschine 1 und der Elektromaschine 10 auf. Zum Betreiben der Verbrennungskraftmaschine 1 weist das Antriebssystem 2 eine Kraftstoffeinlassvorrichtung 13 zum gezielten Einlassen gasförmigen Kraftstoffs in die Verbrennungskraftmaschine 1 und eine Zündvorrichtung 14 zum Zünden des eingebrachten gasförmigen Kraftstoffs auf. Kraftstoffeinlassvorrichtung 13 und Zündvorrichtung 14 sind an der Verbrennungskraftmaschine 1 angeordnet und mittels der Motorsteuerungsvorrichtung 6 steuerbar.

Die Verbrennungskraftmaschine 1 ist über eine Kupplung 4 des Antriebssystems 2 mit einem Getriebe 5 des Antriebssystems 2 mechanisch koppelbar. Die Kupplung 4 ist mittels einer Kupplungssteuerungsvorrichtung 12 der Motorsteuerungsvorrichtung 6 derart steuerbar, dass die Kupplung 4 mit Schlupf, insbesondere mit Mikroschlupf, betrieben wird. Zum Ermitteln eines Kupplungsdrucks weist das Antriebssystem 2 eine Druckermittlungsvorrichtung 7 auf, welche einen Drucksensor 11 und eine Kupplungssteuerungsvorrichtung 12 aufweist. Die Kupplungssteuerungsvorrichtung 12 ist als Teil der Motorsteuerungsvorrichtung 6 ausgebildet. Die Motorsteuerungsvorrichtung 6 weist eine Bestimmungsvorrichtung 8 zum Bestimmen eines an der Kupplung 4 anliegenden IST-Drehmoments der Verbrennungskraftmaschine 1 auf Basis eines von der Druckermittlungsvorrichtung 7 ermittelten Kupplungsdrucks der Kupplung 4 auf. Ferner weist die Motorsteuerungsvorrichtung 6 eine Vergleichsvorrichtung 9 zum Vergleichen des bestimmten IST-Drehmoments mit einem definierten SOLL-Drehmoment der Verbrennungskraftmaschine 1 auf. An einem Kupplungseingang der Kupplung 4 ist ein erster Drehzahlsensor 15 und an einem Kupplungsausgang der Kupplung 4 ein zweiter Drehzahlsensor 16 angeordnet. Über eine Drehzahldifferenz der vom ersten Drehzahlsensor 15 und zweiten Drehzahlsensor 16 ermittelten Drehzahlen ist der aktuelle Schlupf berechenbar.

In Fig. 2 ist eine bevorzugte Ausführungsform des erfindungsgemäßen Verfahrens schematisch in einem Ablaufdiagramm dargestellt. In einem ersten Verfahrensschritt 100 wird die Verbrennungskraftmaschine 1 des Antriebssystems 2 mittels einer Motorsteuerungsvorrichtung 6 des Antriebssystems 2 definiert angesteuert. Hierbei wird gasförmiger Kraftstoff mittels einer Kraftstoffeinlassvorrichtung 13 des Antriebssystems 2 in die Verbrennungskraftmaschine 1 eingebracht bzw. eingeblasen. Anschließend wird der gasförmige Kraftstoff mittels einer Zündvorrichtung 14 des Antriebssystems 2 gezündet. In einem zweiten Verfahrensschritt 200 wird eine Kupplung 4 des Antriebssystems 2 derart eingekuppelt, dass die Verbrennungskraftmaschine 1 mit einem Getriebe 5 des Antriebssystems 2 mechanisch gekoppelt ist und die Kupplung 4 mit einem definierten Schlupf betrieben wird. Das Einkuppeln wird vorzugsweise mittels einer Kupplungssteuerungsvorrichtung 12 der Motorsteuerungsvorrichtung 6 gesteuert. In einem dritten Verfahrensschritt 300 wird mittels einer Druckermittlungsvorrichtung 7 ein Kupplungsdruck der Kupplung 4 ermittelt. Hierfür weist die Druckermittlungsvorrichtung 7 vorzugsweise einen Drucksensor 11 auf oder ist als Teil der Kupplungssteuerungsvorrichtung 12 ausgebildet. In einem vierten Verfahrensschritt 400 wird mittels einer Bestimmungsvorrichtung 8 der Motorsteuerungsvorrichtung 6 auf Basis des ermittelten Kupplungsdrucks der Kupplung 4 ein an der Kupplung 4 anliegendes IST-Drehmoment der Verbrennungskraftmaschine 1 bestimmt. In einem fünften Verfahrensschritt 500 wird mittels einer Vergleichsvorrichtung 9 der Motorsteuerungsvorrichtung 6 das bestimmte IST-Drehmoment mit einem definierten SOLL-Drehmoment der Verbrennungskraftmaschine 1 verglichen. In einem sechsten Verfahrensschritt 600 wird die Verbrennungskraftmaschine1 mittels der Motorsteuerungsvorrichtung 6 derart angesteuert, dass das IST-Drehmoment dem SOLL-Drehmoment angepasst wird. Dies erfolgt durch entsprechendes Anpassen einer Einbringmenge des gasförmigen Kraftstoffs in die Verbrennungskraftmaschine 1.

### Bezugszeichenliste

- 1: Verbrennungskraftmaschine
- 2: Antriebssystem
- 3: Kraftfahrzeug
- 4: Kupplung
- 5: Getriebe
- 6: Motorsteuerungsvorrichtung
- 7: Druckermittlungsvorrichtung
- 8: Bestimmungsvorrichtung
- 9: Vergleichsvorrichtung
- 10: Elektromaschine
- 11: Drucksensor
- 12: Kupplungssteuerungsvorrichtung
- 13: Kraftstoffeinlassvorrichtung
- 14: Zündvorrichtung
- 15: erster Drehzahlsensor
- 16: zweiter Drehzahlsensor
- 17: mechanische Anbindung

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt

## Patentansprüche

1. Verfahren zum Adaptieren einer Verbrennungskraftmaschine (1) eines Antriebssystems (2) eines Kraftfahrzeugs (3) an einen gasförmigen Kraftstoff mit unbekannter Kraftstoffqualität, wobei das Antriebssystem (2) eine Kupplung (4) zum mechanischen Koppeln der Verbrennungskraftmaschine (1) mit einem Getriebe (5) des Antriebssystems (2) aufweist, aufweisend die folgenden Schritte:
- definiertes Ansteuern der Verbrennungskraftmaschine (1) mittels einer Motorsteuerungsvorrichtung (6) des Antriebssystems (2),
- Einkuppeln der Kupplung (4) derart, dass die Verbrennungskraftmaschine (1) mit dem Getriebe (5) mechanisch gekoppelt ist und die Kupplung (4) mit einem definierten Schlupf betrieben wird,
- Ermitteln eines Kupplungsdrucks der Kupplung (4) mittels einer Druckermittlungsvorrichtung (7),
- Bestimmen eines an der Kupplung (4) anliegenden IST-Drehmoments der Verbrennungskraftmaschine (1) auf Basis des ermittelten Kupplungsdrucks der Kupplung (4) mittels einer Bestimmungsvorrichtung (8),
- Vergleichen des bestimmten IST-Drehmoments mit einem definierten SOLL-Drehmoment der Verbrennungskraftmaschine (1) mittels einer Vergleichsvorrichtung (9),
- Bestimmen eines Korrekturwerts zur Anpassung des IST-Drehmoments an das SOLL-Drehmoment mittels der Motorsteuerungsvorrichtung (6), und
- Ansteuern der Verbrennungskraftmaschine auf Basis des Korrekturwerts mittels der Motorsteuerungsvorrichtung (6) derart, dass das IST-Drehmoment dem SOLL-Drehmoment angepasst wird.

2. Verfahren nach Anspruch 1,
**dadurch gekennzeichnet,**
**dass** die Kupplung (4) mit Mikroschlupf betrieben wird.

3. Verfahren nach Anspruch 1 oder 2,
**dadurch gekennzeichnet,**
**dass** ein hybrides Antriebssystem (2) verwendet wird, welches eine mit der Verbrennungskraftmaschine (1) mechanisch koppelbare Elektromaschine (10) aufweist, wobei das Bestimmen des an der Kupplung (4) anliegenden IST-Drehmoments der Verbrennungskraftmaschine (1) auf Basis des ermittelten Kupplungsdrucks der Kupplung (4) und eines IST-Elektrodrehmoments der Elektromaschine (10) erfolgt.

4. Verfahren nach Anspruch 3,
**dadurch gekennzeichnet,**
**dass** die Verbrennungskraftmaschine (1) zu Beginn des Verfahrens mittels der Elektromaschine (10) des hybriden Antriebssystems (2) auf eine Schleppdrehzahl gebracht wird.

5. Verfahren nach Anspruch 4,
**dadurch gekennzeichnet,**
**dass** die Verbrennungskraftmaschine (1) mittels der Elektromaschine (10) des hybriden Antriebssystems (2), insbesondere während des Ermittelns des Kupplungsdrucks, auf der Schleppdrehzahl gehalten wird.

6. Verfahren nach einem der Ansprüche 3 bis 5,
**dadurch gekennzeichnet,**
**dass** eine Elektromaschine (10) verwendet wird, welche zum Antreiben des Kraftfahrzeugs (3) als Riemenstartergenerator oder Anlasser des Kraftfahrzeugs (3) ausgebildet ist.

7. Verfahren nach einem der vorangegangenen Ansprüche,
**dadurch gekennzeichnet,**
**dass** der Kupplungsdruck der Kupplung (4) mittels einer als Drucksensor (11) oder Kupplungssteuerungsvorrichtung (12) ausgebildeten Druckermittlungsvorrichtung (7) ermittelt wird.

8. Verfahren nach einem der vorangegangenen Ansprüche,
**dadurch gekennzeichnet,**
**dass** der definierte Schlupf mittels eines ersten Drehzahlsensors (15) und eines zweiten Drehzahlsensors (16) ermittelt wird, wobei der erste Drehzahlsensor (15) zum Bestimmen einer Kupplungseingangsdrehzahl der Kupplung (4) und/oder einer Motordrehzahl der Verbrennungskraftmaschine (1) und der zweite Drehzahlsensor (16) zum Bestimmen einer Kupplungsausgangsdrehzahl der Kupplung (4) und/oder einer Getriebeeingangsdrehzahl des Getriebes (5) ausgebildet und angeordnet ist.

9. Antriebssystem (2) für ein Kraftfahrzeug (3), aufweisend eine mit einem gasförmigen Kraftstoff betreibbare Verbrennungskraftmaschine (1), eine Motorsteuerungsvorrichtung (6) zum Steuern der Verbrennungskraftmaschine (1), eine Kraftstoffeinlassvorrichtung (13) zum Einbringen des gasförmigen Kraftstoffs in die Verbrennungskraftmaschine (1), eine Zündvorrichtung (14) zum Zünden des gasförmigen Kraftstoffs, eine Kupplung (4) mit einer Kupplungssteuerungsvorrichtung (12) zum mechanischen Koppeln der Verbrennungskraftmaschine (1) mit einem Getriebe (5) des Antriebssystems (2), eine Druckermittlungsvorrichtung (7) zum Ermitteln eines Kupplungsdrucks der Kupplung (4), eine Bestimmungsvorrichtung (8) zum Bestimmen eines an der Kupplung (4) anliegenden IST-Drehmoments auf Basis des ermittelten Kupplungsdrucks, und eine Vergleichsvorrichtung (9) zum Vergleichen des bestimmten IST-Drehmoments mit einem definierten SOLL-Drehmoment der Verbrennungskraftmaschine (1),
**dadurch gekennzeichnet,**
**dass** das Antriebssystem (2) zur Durchführung eines Verfahrens nach einem der Ansprüche 1 bis 8 ausgebildet ist.

10. Kraftfahrzeug (3), aufweisend ein Antriebssystem (2),
**dadurch gekennzeichnet,**
**dass** das Antriebssystem (2) gemäß einem Antriebssystem (2) nach Anspruch 9 ausgebildet ist.
